# EUROPEAN PATENT APPLICATION

(11) **EP 4 442 555 A1**
(43) Date of publication of application: **09.10.2024**
(21) Application number: 22901274.5
(22) Date of filing: 29.11.2022
(51) Int. Cl.: B63B 35/00, B63B 35/03, B63B 35/04, G01B 11/16, G01B 11/24

(54) **CONTROL SYSTEM AND CONTROL METHOD**

(30) Priority: 02.12.2021 JP 2021195986
(71) Applicant: Nippon Telegraph And Telephone Corporation, Chiyoda-ku Tokyo 100-8116 (JP); The University of Tokyo, Bunkyo-ku, Tokyo 113-8654 (JP)
(72) Inventor: HANZAWA, Nobutomo, Musashino-shi, Tokyo 180-8585 (JP); NAKAJIMA, Kazuhide, Musashino-shi, Tokyo 180-8585 (JP); MATSUI, Takashi, Musashino-shi, Tokyo 180-8585 (JP); MURAYAMA, Hideaki, Tokyo 113-8654 (JP); WADA, Ryota, Tokyo 113-8654 (JP)
(74) Representative: v. Bezold & Partner Patentanwälte - PartG mbB
(86) International application number: PCT/JP2022/043880
(87) International publication number: WO 2023/100842

(57) **Abstract**

An object of the present disclosure is to enable collection of information indicating a state of an underwater structure, and thereby improve the efficiency and reliability of an above-water system including above-water and underwater structures connected to each other.

The present disclosure is a control system configured to: collect a strain distribution of an underwater structure connected to an above-water structure; and control at least one of the underwater structure and the above-water structure in accordance with the strain distribution.

## Description

### Technical Field

The present disclosure relates to control of above-water and underwater structures connected to each other.

### Background Art

Regarding above-water systems including above-water and underwater structures connected to each other (for example, an underwater drilling system including a riser and a drillship, a cable laying system including a communication cable and a cable ship, and the like), a control system has been proposed that dynamically controls the underwater structure itself or the above-water structure connected to the underwater structure (see, for example, Non Patent Literatures 1 and 2.).

Collection of information indicating a state of an underwater structure is useful for improving the efficiency of an above-water system. Therefore, in Non Patent Literature 1, when a riser is installed between a drillship and the seabed, the work is performed by visual observation or the like at a shallow water depth by attaching an acoustic positioning device and an underwater camera to a distal end part of the riser. In addition, Non Patent Literature 2 discusses control of elastic deformation of a riser including movement of a drillship by attaching thrusters to a lower end part and an intermediate part of the riser.

### Citation List

### Non Patent Literature

Non Patent Literature 1: Hideyuki Suzuki et al., "Basic Research on the Automatic Reentry of Deepwater Riser by Active Control", Journal of the Society of Naval Architects of Japan, No. 174, pp. 865-874, 1993.
Non Patent Literature 2: Wataru Koterayama et al., "Demonstration Experiments of DPS and Reentry Control System Based on Riser Dynamics", Conference Proceedings, the Japan Society of Naval Architects and Ocean Engineers, No. 4, 2007S-62-8, 2007.

### Summary of Invention

### Technical Problem

However, in Non Patent Literatures 1 and 2, it is impossible to collect the information indicating the state of the underwater structure that changes random shapes under water, and thus efficient control of the underwater structure and the above-water structure cannot be achieved.

Therefore, an object of the present disclosure is to enable collection of information indicating a state of an underwater structure, and thereby improve the efficiency and reliability of an above-water system including above-water and underwater structures connected to each other.

### Solution to Problem

A control system and a control method of the present disclosure are characterized by:
collecting a strain distribution of an underwater structure connected to an above-water structure; and
controlling at least one of the underwater structure and the above-water structure in accordance with the strain distribution.

### Advantageous Effects of Invention

According to the present disclosure, it is practical to collect information indicating a state of an underwater structure by collecting a strain distribution of the underwater structure. Therefore, the present disclosure enables control based on the information indicating the state of the underwater structure, and thus, can achieve improvement in the efficiency and reliability of an above-water system including above-water and underwater structures connected to each other.

### Brief Description of Drawings

Fig. 1 illustrates a conceptual configuration diagram of an exemplary embodiment of the present disclosure.
Fig. 2 illustrates an example of a hardware configuration of a device.
Fig. 3 illustrates an example of a control flow of the exemplary embodiment of the present disclosure.
Fig. 4 illustrates a conceptual configuration diagram of an exemplary embodiment of the present disclosure.
Fig. 5 illustrates an example of a control flow of the exemplary embodiment of the present disclosure.
Fig. 6 illustrates an example of a schema of an exemplary embodiment of the present disclosure.

### Description of Embodiments

Hereinafter, embodiments of the present disclosure will be described in detail with reference to the drawings. Note that the present disclosure is not limited to the following embodiments. These embodiments are merely examples, and the present disclosure can be implemented in a form with various modifications and improvements applied on the basis of the knowledge of a person skilled in the art. Note that components having the same reference numerals in the present specification and the drawings indicate the same components.

### (First Exemplary Embodiment)

By measuring a strain distribution of an underwater structure, it is practical to measure moving direction and distance of each measurement point of a strain. Therefore, measuring the strain distribution of the underwater structure makes it practical to collect information indicating a state of the underwater structure. Thus, in an above-water system including an above-water structure and an underwater structure connected to the above-water structure, a control system and a control method of the present exemplary embodiment control either the underwater structure or the above-water structure, or both of them by measuring a strain distribution in a length direction of the underwater structure.

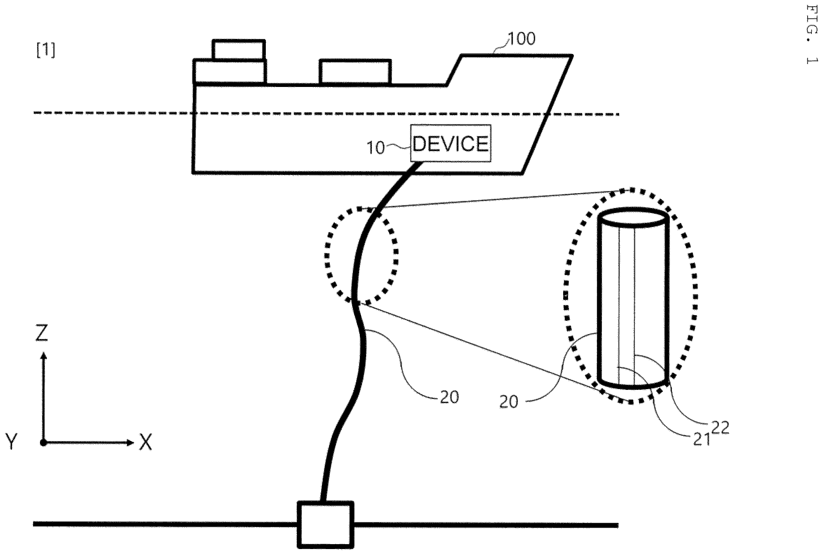

Fig. 1 illustrates a conceptual configuration diagram of the present exemplary embodiment. In the present embodiment, an example in which the above-water structure is a vessel 100 and an underwater structure 20 is a linear structure such as a riser or a cable is described. The vessel 100 can be any means capable of navigating on water, and for example, a drillship or a cable ship can be exemplified.

In the present embodiment, optical fibers 21 and 22 are installed in the length direction of the underwater structure 20. The control system of the present embodiment measures a strain distribution applied to the optical fibers 21 and 22 to infer and control a strain applied to the underwater structure 20.

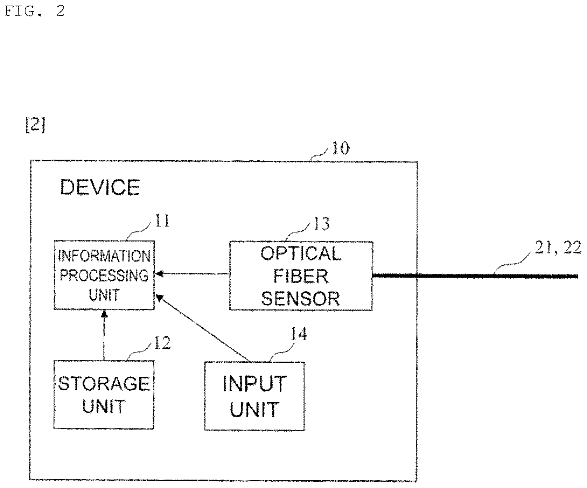

Fig. 2 illustrates an example of a hardware configuration of the present exemplary embodiment. A device 10 includes an information processing unit 11, a storage unit 12, an optical fiber sensor 13, and an input unit 14. The device 10 of the present embodiment or all or part of functions stored therein can also be realized by a computer and a program, and the program can be recorded in a recording medium or provided through a network.

The optical fiber sensor 13 is connected to the optical fibers 21 and 22 attached along the underwater structure 20, and measures strain distributions in the two optical fibers 21 and 22. The input unit 14 can be any means capable of inputting a parameter, such as a keyboard or a touch panel.

The storage unit 12 stores discretionary data used for processing of the information processing unit 11 and a processing result of the information processing unit 11 in addition to the strain measured by the optical fiber sensor 13. The data used for the processing of the information processing unit 11 includes a program for measuring the strain distribution of the underwater structure 20 and parameters used for the program. The data used for the processing of the information processing unit 11 includes a program for controlling at least one of the underwater structure 20 and the above-water structure 100 in accordance with the strain distribution measured by the optical fiber sensor 13, and parameters used for the program.

All or part of the data used for the processing of the information processing unit 11 may be stored in a common device or may be stored in a distributed manner in different devices. For example, the program for controlling at least one of the underwater structure 20 and the above-water structure 100 and the parameters used for the program may be stored in the vessel 100, or may be provided in a device for controlling the underwater structure 20, such as a thruster, or in the underwater structure 20.

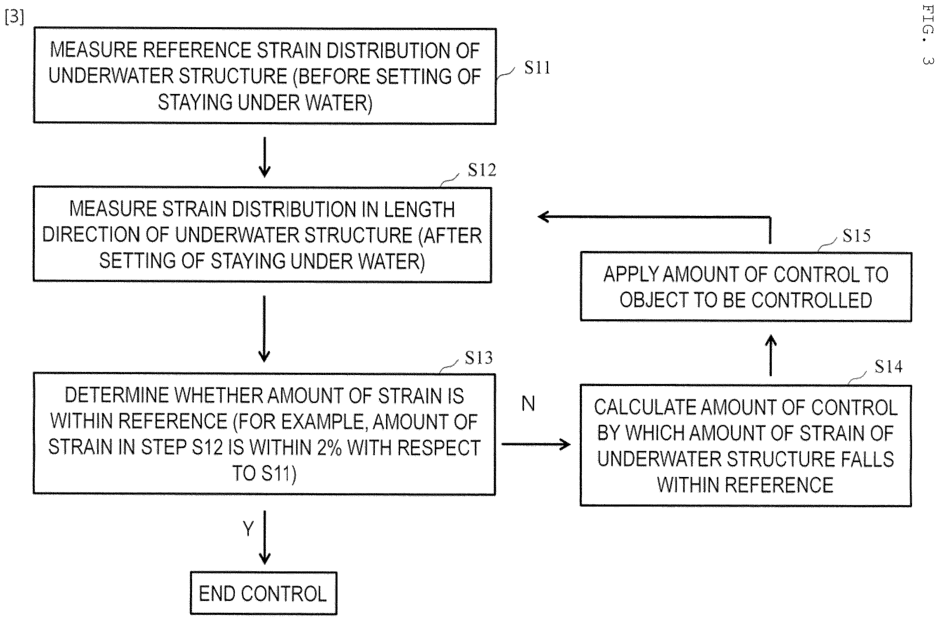

Fig. 3 illustrates an example of a control flow executed by the control system of the present embodiment. The optical fiber sensor 13 measures the strain distributions of the optical fibers 21 and 22 attached along the underwater structure 20 before the linear structure 20 is set staying under water, immediately after the underwater structure 20 is set staying under water, or the like (S11). As a result, the information processing unit 11 acquires a reference value of the strain distributions of the optical fibers 21 and 22.

The optical fiber sensor 13 measures the strain distributions of the optical fibers 21 and 22 at certain time intervals or the like after the underwater structure 20 is set staying under water (S12). The information processing unit 11 detects the amount of strain changed from the reference value. The amount of strain changed from the reference value expresses the amount of change in the underwater structure 20 at a measurement point of the strain distribution. Therefore, the information processing unit 11 can collect the information indicating the state of the underwater structure 20 in the length direction.

The information processing unit 11 determines whether the detected amount of strain is within a set range of the amount of strain (S13). When determining as N, the information processing unit 11 calculates the amount of control of the underwater structure 20 or the vessel 100, or both of them by which the amount of strain returns to fall within the range (S14). Then, the information processing unit 11 applies the amount of control to an object to be controlled (S15). As a result, the control system of the present embodiment can keep the amount of strain of the underwater structure 20 constant.

For example, when the underwater structure 20 is bent in a negative direction on an X-axis in Fig. 1, the information processing unit 11 moves the vessel 100 in the negative direction on the X-axis so as to eliminate the bending. In addition, when a thruster is attached to the underwater structure 20, the information processing unit 11 may move the underwater structure 20 itself in a direction to eliminate the bending. In the present exemplary embodiment, it is defined that the amount of strain from the reference value is within 2%, but this reference value needs to be set to an appropriate value in accordance with the underwater structure 20 and the object to be controlled.

Here, the amount of strain of 2% is assumed as an elongation strain caused by the bending of the underwater structure 20. In addition, although it is described in the present exemplary embodiment that the control is performed by the strain, the strain may be converted into a stress using an elastic coefficient and then the control may be performed on the basis of the stress. For example, the information processing unit 11 infers a stress distribution applied to the underwater structure 20 using the strain distribution of the underwater structure 20. Then, the information processing unit 11 controls at least one of the underwater structure 20 and the above-water structure 100 in accordance with the stress applied to the underwater structure 20.

Although an example, in which the optical fibers 21 and 22 are set staying in the length direction of the underwater structure 20 under water, has been described in the present exemplary embodiment, the number of optical fibers 21 and 22 is not limited to one, and may be plural, or a multi-core fiber having a plurality of cores per fiber may be adopted. A method for installing the optical fibers 21 and 22 on the underwater structure 20 may be any method, and the optical fibers 21 and 22 may be installed linearly or may be wound spirally with respect to the underwater structure 20.

Brillouin optical time domain reflectometry (B-OTDR) or optical frequency domain reflectometry (OFDR) may be used to measure the strain distribution of the optical fiber in the optical fiber sensor 13.

In addition, the information processing unit 11 may obtain three-dimensional coordinates of each measurement point of the strain distribution of the underwater structure 20 from the strain distribution measured using the plurality of optical fibers 21 and 22 or the multi-core fiber having a plurality of cores, infer a three-dimensional shape of the underwater structure 20, and control the shape. Here, the three-dimensional shape is calculated, by use of the Frenet-Serret integral formula or the like, by calculating a differential strain between a strain distribution measured in a reference shape and a strain distribution measured for inferring the shape in each core. In addition, the shape of the underwater structure 20 can be controlled, for example, by controlling the thruster attached to the underwater structure 20.

As described above, in the present embodiment, the device 10 measures the strains of the plurality of cores of the optical fibers 21 and 22 attached along the underwater structure 20, collects the information indicating the state in the length direction of the underwater structure 20 set staying under water, and dynamically controls the position of the underwater structure 20 or the vessel 100 that is the above-water structure. As a result, the control system of the present embodiment can improve the efficiency and reliability of the above-water system including the above-water and underwater structures connected to each other.

Note that the measurement of the strain distribution is not limited to by means of the optical fibers 21 and 22. For example, the distribution measurement in the length direction of the underwater structure 20 may be performed by disposing a plurality of sensors such as strain gauges along the underwater structure 20.

### (Second Exemplary Embodiment)

The present exemplary embodiment relates to a control system and a control method for controlling, in an above-water system including an above-water structure and an underwater structure connected to the above-water structure, the position of the underwater structure or the above-water structure by extracting three-dimensional coordinate information in a length direction of the underwater structure.

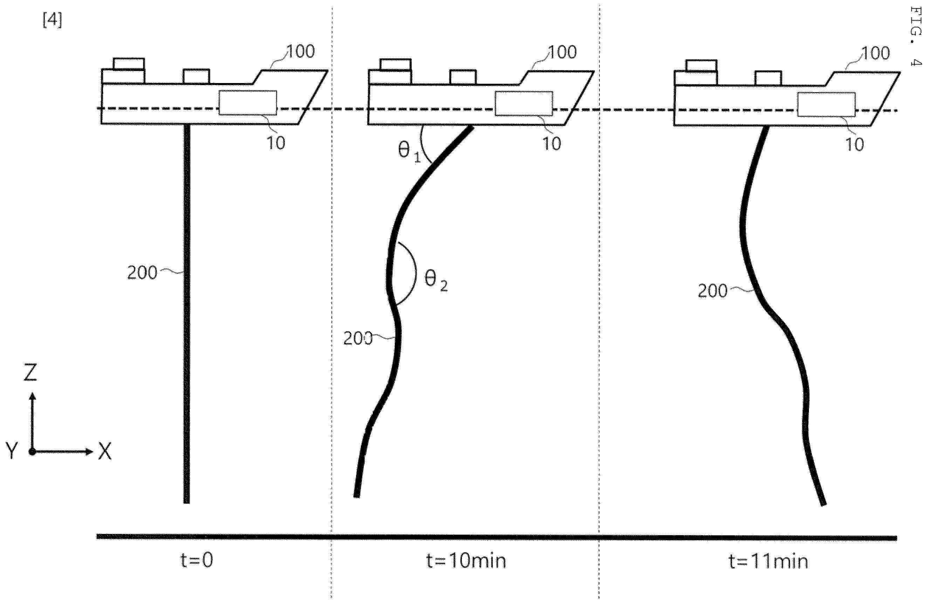

Fig. 4 illustrates a conceptual configuration diagram of the present exemplary embodiment. The underwater structure may be, for example, a linear structure such as a riser pipe or a communication cable. In the present embodiment, an example in which the above-water structure is a vessel 100 and an underwater structure 20 is a cable 200 will be described. Similarly to the first exemplary embodiment, in the control system of the present embodiment, optical fibers (reference numerals 21 and 22 illustrated in Fig. 1) for extracting three-dimensional position information in the length direction are installed in the cable 200. In the vessel 100 that is the above-water structure, a device 10 is installed that observes strain distributions in the length direction of cores of the optical fibers 21 and 22 installed in the cable 200, and infers a three-dimensional behavior from the strain distributions of the cores.

The device 10 of the present embodiment has the same configuration as that of the first exemplary embodiment. However, in the present embodiment, the information processing unit 11 performs control in accordance with three-dimensional coordinates obtained by inferring the cable 200 or the vessel 100 that is the above-water structure, or both of them, so as to prevent bending of a connection member between the vessel 100 that is the above-water structure and the cable 200 or bending of the cable 200 itself.

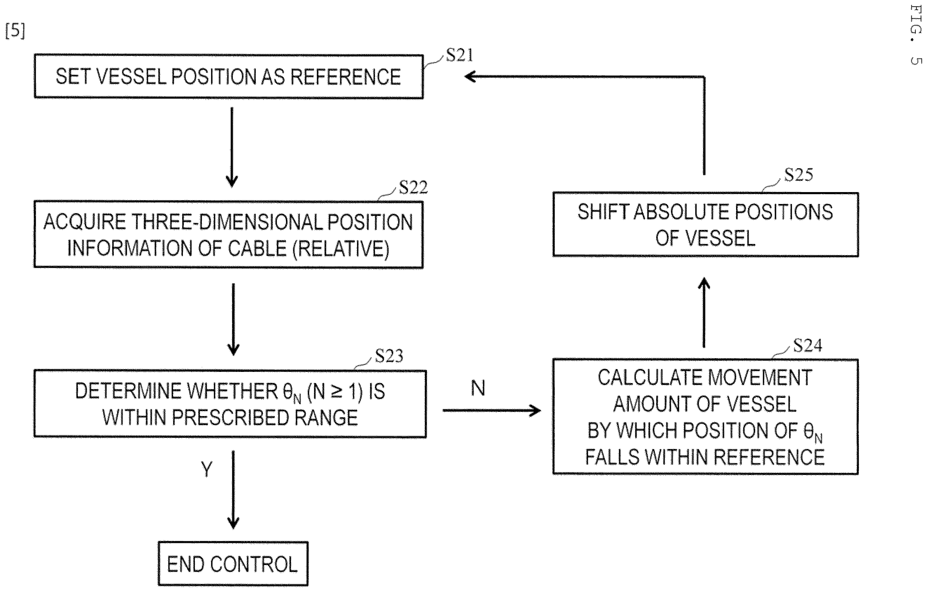

Fig. 5 illustrates an example of a control flow executed by the control system of the present embodiment. For example, assuming that the cable 200 is extended downward in a state of being connected to the vessel 100, the cable 200 behaves in a complicated manner in X and Y directions due to the influence of oceanographic phenomena. In the present embodiment, by positioning the optical fibers 21 and 22 along the cable 200, the information processing unit 11 identifies the behavior of the cable 200 from the strains of the cores provided in the optical fibers 21 and 22, and infers the position of the cable 200 with respect to the vessel 100.

Since the vessel 100 and the cable 200 are fixed together, the behavior of the cable 200 may apply a stress depending on a bending angle of the connection member to the cable 200 or the cable 200, which leads to a risk of buckling of the cable 200 or the like. Therefore, the information processing unit 11 measures the position of the vessel 100 (S21), and acquires the three-dimensional position of the cable 200 on the basis of the position of the vessel 100 (S22).

For example, the information processing unit 11 calculates an angle θ₁ formed between the vessel 100 and the cable 200 or a bending angle θ₂ of the cable 200. As the angle θ₁, which depends on a connection form of the cable 200, an angle between the length direction of the cable at a position close to the water surface and the water surface or the vessel bottom can be exemplified. The bending angle θ₂ can be at any point in the length direction of the cable 200, and may be at two or more points. That is, the control system of the present embodiment calculates angle(s) θ_{N} of N point(s) (N is one or more).

When at least θ₁ or θ₂ is out of a set angular range (N in S23), the information processing unit 11 calculates a direction and a movement amount by which the angle falls within a prescribed range (S24), and performs control to, for example, move the vessel 100 in the calculated direction. As a result, the control system of the present embodiment can prevent the cable 200 from being damaged.

Although it has been described here that the device 10 moves the vessel 100, the device 10 may control a thruster, given to the cable 200, to position the cable 200 at a desired position with respect to the vessel 100, or may control both the vessel 100 and the thruster to obtain a desired angle. In addition, the control may be performed in accordance with a stress calculated from the strain distribution instead of the angle θ_{N}. In addition, a plurality of optical fibers may be used as the optical fibers 21 and 22 used at this time, or a multi-core fiber having a plurality of cores in one optical fiber may be used. In addition, B-OTDR or OFDR may be used to measure the strain distribution of the optical fiber in the optical fiber sensor 13.

### (Third Exemplary Embodiment)

The present exemplary embodiment relates to a control system and a control method for controlling a linear structure laid under water.

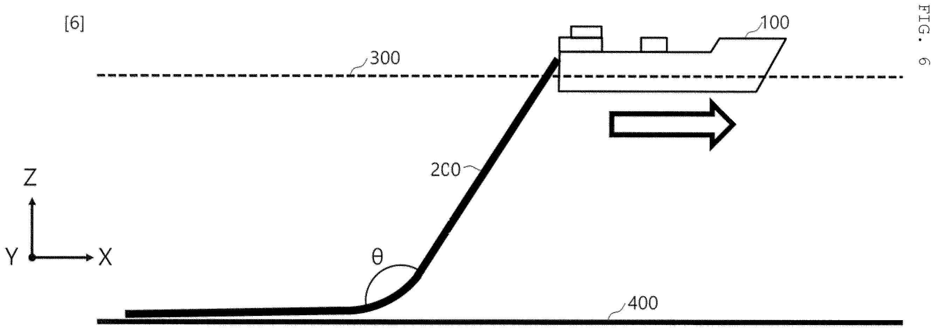

Fig. 6 illustrates a schematic diagram. When the cable 200 is fed from the vessel 100 and laid on the seabed, stress is concentrated on a part landing on a seabed 400 from a sea surface 300 as illustrated in Fig. 6, and it is necessary to perform control so as not to bend the cable 200 by adjusting a feeding speed of the cable 200 and a moving speed of the vessel 100. Currently, when a submarine cable is laid, the occurrence of dangling or a kink in the cable 200 is avoided by monitoring an angle (water-entering angle) between the water surface and the cable.

When the three-dimensional position or shape of the cable 200 for being laid is acquirable, an angle θ formed in the cable 200 between the seabed 400 and the vessel 100 can be monitored. Therefore, the control system of the present embodiment has the same configuration as that of the first exemplary embodiment, and the information processing unit 11 executes the following processing.

Specifically, the information processing unit 11 calculates the angle θ formed in the cable 200 between the seabed 400 and the vessel 100 using the strain distribution of the cable 200. When θ approaches 0 degrees, the information processing unit 11 determines that the cable 200 is approaching a state of suspension and the feeding speed is slow. On the other hand, when θ approaches 90 degrees, it is determined that a kink is likely to occur and the feeding speed of the cable is too fast. As a result, the control system of the present embodiment can appropriately adjust the speed of the vessel 100 and the feeding speed of the cable 200, and can safely and efficiently feed the cable 200.

### (Effects of Present Disclosure)

The three-dimensional coordinates of the underwater structure 20 can be directly controlled by measuring the strains of the plurality of cores of the optical fibers 21 and 22 disposed in the length direction of the underwater structure 20 and collecting the information indicating the state of the underwater structure 20 in the length direction. In addition, the position of the above-water structure 100 can be controlled on the basis of a change in the three-dimensional coordinates of the underwater structure 20.
- For example, by dynamically controlling the position of a riser or a drillship under water or above water, respectively, it is practical to achieve reduction of a strain at the riser or a connection member between the riser and the drillship, and improve the reliability of the above-water system.
- For example, position information of a plurality of underwater work devices connected to a cable ship can be managed, and congestion of the underwater work devices can be avoided.
- For example, by detecting a change in the amount of strain due to landing of a communication cable dropped from a cable ship on the water bottom, a cable laying strain applied to the communication cable can be minimized.

### Industrial Applicability

The present disclosure can be applied to the information and communication industry.

### Reference Signs List

- 10: Measurement device
- 11: Information processing unit
- 12: Storage unit
- 13: Optical fiber sensor
- 14: Input unit
- 20: Underwater structure
- 21, 22: Optical fiber
- 100: Vessel
- 200: Cable
- 300: Sea surface
- 400: Seabed

## Claims

1. A control system configured to:
collect a strain distribution of an underwater structure connected to an above-water structure; and
control at least one of the underwater structure and the above-water structure in accordance with the strain distribution.

2. The control system according to claim 1, wherein
the underwater structure is a linear structure, and
the strain distribution is a strain distribution in a length direction of the linear structure.

3. The control system according to claim 1, wherein
a three-dimensional shape of the underwater structure is inferred using the strain distribution, and
at least one of the underwater structure and the above-water structure is controlled in accordance with the inferred three-dimensional shape.

4. The control system according to claim 1, wherein
a stress applied to the underwater structure is inferred using the strain distribution, and
at least one of the underwater structure and the above-water structure is controlled in accordance with the inferred stress.

5. The control system according to claim 1, wherein
the strain distribution of the underwater structure is collected using an optical fiber installed along the underwater structure.

6. The control system according to claim 5, wherein
the optical fiber includes a plurality of cores.

7. The control system according to claim 5, wherein
the strain distribution of the underwater structure is measured using Brillouin optical time domain reflectometry (B-OTDR) for measuring a strain distribution of the optical fiber.

8. A control method comprising:
collecting a strain distribution of an underwater structure connected to an above-water structure; and
controlling at least one of the underwater structure and the above-water structure in accordance with the strain distribution.
